# EUROPÄISCHE PATENTANMELDUNG

(11) **EP 4 379 438 A1**
(43) Veröffentlichungstag der Anmeldung: **05.06.2024**
(21) Anmeldenummer: 23192376.4
(22) Anmeldetag: 21.08.2023
(51) Int. Cl.: G02B 6/42

(54) **LEITERPLATTE MIT OPTISCHER FASER**

(30) Priorität: 30.11.2022 DE 102022131715
(71) Anmelder: MD Elektronik GmbH, 84478 Waldkraiburg (DE)
(72) Erfinder: Pritz, Helmut, 84539 Ampfing (DE)

(57) **Zusammenfassung**

Die vorliegende Erfindung betrifft eine Leiterplatte (1) aufweisend eine erste Seite (11) und eine gegenüberliegende zweite Seite (12), zumindest eine optische Faser (2) zum Weiterleiten eines optischen Signals (4), wobei die zumindest eine optische Faser (2) in der Leiterplatte (1) zwischen der ersten und zweiten Seite (11, 12) verläuft, eine Aussparung (6) in der Leiterplatte (1), die sich von der ersten Seite (11) in Richtung zur zweiten Seite (12) zumindest bis zu der zumindest einen optischen Faser (2) erstreckt, und ein Linsensystem (8), das in der Aussparung (6) angeordnet ist, so dass das optische Signal (4) zwischen der zumindest einen optischen Faser (2) und einem Strahlenverlauf parallel zur ersten Seite (11) außerhalb der Leiterplatte (1) geleitet werden kann, wobei das Linsensystem (8) eine Doppellinse umfasst, und einteilig aus einem Kunststoff hergestellt ist.

## Beschreibung

### Technisches Gebiet

Die Erfindung betrifft eine Leiterplatte, oder auch Platine oder PCB genannt, die zumindest eine optische Faser aufweist.

### Stand der Technik

Leiterplatten oder Platinen werden im Stand der Technik in elektrischen und elektronischen Geräten verwendet. In der Regel sind Platinen mit verschiedenen Layern oder Schichten aufgebaut, die elektrische Bahnen enthalten. Platinen mit elektrischen Bahnen haben mit zunehmender Frequenz Probleme mit elektromagnetischen Einflüssen von außen bzw. der Abstrahlung nach außen. Dies führt zu schlechter Signalintegrität und Verlustleistung.

Um diese Nachteile zu umgehen kann man optische Signale verwenden und diese über optische Fasern als Leiterbahnen in der Platine weiterleiten. Dadurch wird es möglich die Signale ohne störende Einflüsse zu übertragen und damit die Signalintegrität zu wahren.

Im Stand der Technik sind für das Ein- und Auskoppeln in bzw. aus der Platine spezielle Bauteile notwendig. Häufig werden Linsen-Spiegel-System verwendet, um Signale in bzw. aus der Platine zu koppeln. Diese Systeme sind schwierig in eine Platine zu integrieren und beanspruchen eine Menge Platz.

### Beschreibung der Erfindung

Es ist daher eine Aufgabe der vorliegenden Erfindung ein einfaches und platzsparendes Ein- und Auskoppeln von optischen Signalen in bzw. aus eine(r) Leiterplatte mit einer optischen Faser bereitzustellen.

Die oben genannte Aufgabe wird durch eine Leiterplatte nach Anspruch 1 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch eine Leiterplatte aufweisend eine erste Seite und eine gegenüberliegende zweite Seite, zumindest eine optische Faser zum Weiterleiten eines optischen Signals, wobei die zumindest eine optische Faser in der Leiterplatte zwischen der ersten und zweiten Seite verläuft, eine Aussparung in der Leiterplatte, die sich von der ersten Seite in Richtung zur zweiten Seite zumindest bis zu der zumindest einen optischen Faser erstreckt, und ein Linsensystem, das in der Aussparung angeordnet ist, so dass das optische Signal zwischen der zumindest einen optischen Faser und einem Strahlenverlauf parallel zur ersten Seite außerhalb der Leiterplatte geleitet werden kann.

Die Aussparung kann flexibel im Prinzip überall auf der Leiterplatte angeordnet werden. Somit kann die vorliegende Leiterplatte individuell gestaltet werden. Das Einbringen der Aussparung in die Leiterplatte kann auch zu verschiedenen Zeitpunkten erfolgen, so dass die vorliegende Leiterplatte auch noch später an Bedürfnisse in der Anwendung angepasst werden kann. Ebenso flexibel kann das Linsensystem gestaltet oder verändert werden. Somit ist die vorliegenden Leiterplatte einfach herzustellen und umzurüsten. Das parallele Ein- und/oder Auskoppeln des optischen Signals zur Oberfläche der Leiterplatte ist sehr platzsparend. Zum Beispiel kann ein opto-elektrischer Signalwandler flexibel am Rand der vorliegenden Leiterplatte angeordnet werden, während sich das Linsensystem irgendwo auf der Leiterplatte befindet.

Das Linsensystem umfasst eine Doppellinse. Die Doppellinse ist einfach aufgebaut und kann einfach in der Aussparung angeordnet werden. Ausrichtungsfehler oder Verschmutzungen im Signalgang des Linsensystems, wie bei Spiegeln im Stand der Technik, treten nicht auf.

Das Linsensystem ist einteilig aus einem Kunststoff hergestellt. Der einteilige oder monolithische Aufbau erleichtert die Anwendung bzw. Anordnung des Linsensystems in der Aussparung. Die Herstellung aus Kunststoff ist ein einfach und schnell umzusetzen. Die Eigenschaften, insbesondere die Signalweiterleitungseigenschaften, des Linsensystems können optimal an ein bestimmtes Linsensystem angepasst werden. Dies ermöglicht eine hohe Flexibilität der vorliegenden Leiterplatte.

Bevorzugt verzichtet das Linsensystem auf den Einsatz von Spiegeln oder anderen optischen Bauteilen.

Bevorzugt wird das optische Signal, dass aus einer beliebigen Richtung parallel zur ersten Seite der Leiterplatte eintrifft, vom Linsensystem aufgenommen und an eine optische Faser weitergeleitet.

Bevorzugt umfasst die Aussparung eine Bohrung. Eine Bohrung kann einfach erzeugt werden und im Prinzip überall auf der Leiterplatte, mit Zugang zur optischen Faser, angeordnet werden. Die Bohrung kann zusätzlich eine Kodierung enthalten, damit ein passendes Linsensystem korrekt ausgerichtet in der Aussparung angeordnet wird.

Bevorzugt ist das Linsensystem formschlüssig in der Aussparung angeordnet. Die formschlüssige Anordnung verhindert ein Eindringen von Schmutz und/oder Feuchtigkeit in die Aussparung. So kann eine zuverlässige Signalübertragung durch das Linsensystem gewährleistet werden.

Die folgende Beschreibung von Ausführungsformen erfolgt unter Bezugnahme auf die begleitende Figur. Dabei zeigt:

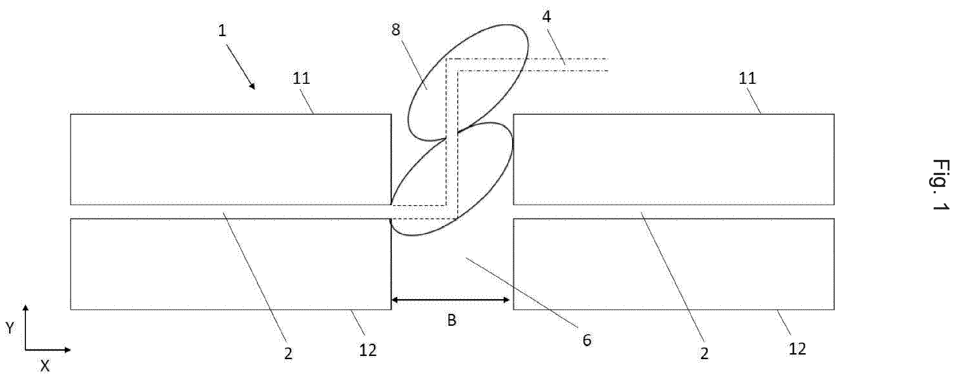

- Fig. 1: eine schematische Querschnittsansicht einer Ausführungsform einer Leiterplatte mit einer optischen Faser.

Im Folgenden werden bevorzugte Ausführungsformen im Detail mit Bezug auf die beigefügte Figur beschrieben.

Fig. 1 zeigt eine Ausführungsform einer Leiterplatte 1 mit einer optischen Faser 2. Die Anzahl an optischen Fasern kann in anderen Ausführungsformen größer sein. Die optische Faser 2 weist bevorzugt einen linearen Verlauf innerhalb der Leiterplatte 1 auf. In alternativen Ausführungsformen kann die optische Faser 2 auch nicht-linear, zum Beispiel gebogen, verlaufen. Die Leiterplatte 1 kann in alternativen Ausführungsformen mehrere Schichten aufweisen, die optische Fasern 2 umfassen. Die Schichten sind bevorzugt in einer zweiten Richtung Y übereinander angeordnet. In der dargestellten Ausführungsform breitet sich die Leiterpatte 1 im Wesentlichen zumindest in eine erste Richtung X aus. Die optische Faser 2 kann sich in anderen Ausführungsformen auch in einer dritten Richtung, die in die Figurenebene verläuft, oder einer Überlagerung aus erster Richtung X und dritter Richtung ausbreiten.

Die optische Faser 2 besteht bevorzugt aus einem Kunststoff und ist mit einem Mantel umgeben. Die Brechungsindizes bzw. optischen Eigenschaften der optischen Faser 2 und des Linsensystems 8 sind abgestimmt, so dass eine optimale Signalweiterleitung bereitgestellt ist. Optimal heißt dabei ohne Signalverluste und/oder ungewollten Reflexionen bzw. Streuungen.

Das Linsensystem 8 verzichtet auf den Einsatz von Spiegeln oder anderen optischen Bauteilen, die im Signalgang Verschmutzen und/oder Verrutschen könnten. In einer bevorzugten Ausführungsform umfasst das Linsensystem 8 eine Doppellinse. Die Doppellinse ist monolithisch aufgebaut und führt ein optisches Signal 4 im Inneren von der Eintrittsstelle bis zur Austrittsstelle. Dabei kann die Doppellinse das optische Signal 4 parallel versetzt zum Eingang auch wieder ausgeben, wobei die Signalrichtung beibehalten oder verändert werden kann. Veränderung heißt das optische Signal 4 kann zum Beispiel, wenn es aus der Leiterplatte 1 an die Oberfläche der Leiterplatte 1 geleitet wird, in umgekehrte Richtung oder eine winkelversetzte Richtung parallel zur Oberfläche der Leiterplatte 1 weiter verlaufen. In umgekehrter Richtung kann ein optisches Signal, dass aus einer beliebigen Richtung parallel zur Oberfläche (welche in Fig. 1 der ersten Seite 11 entspricht) der Leiterplatte 1 eintrifft, vom Linsensystem 8 aufgenommen und an eine optische Faser 2 weitergeleitet werden, wobei die optische Faser 2 dann eine bestimmte Richtung innerhalb der Leiterplatte 1 aufweist.

Die Aussparung 6 weist eine Breite B auf. Die Breite B ist an das Linsensystem 8 angepasst. Die Breite B kann für verschiedene Linsensysteme 8 unterschiedlich ausfallen. Sollte eine Aussparung 6 kein Linsensystem 8 mehr enthalten, kann ein passendes Passstück zur Weiterleitung des optischen Signals 4 entlang der optischen Faser 2 in die Aussparung 6 eingesetzt werden. Das Passstück umfasst eine optische Faser, die direkt an die optische Faser 2 innerhalb der Leiterplatte 1 gekoppelt bzw. angeordnet werden kann. In Fig. 1 würde ein solches Passstück eine direkte Weiterleitung des optischen Signals 4 von einem Ende zum anderen Ende der Leiterplatte 1 entlang der ersten Richtung X ermöglichen.

### BEZUGSZEICHENLISTE

- 1: Leiterplatte
- 2: optische Faser
- 4: optisches Signal
- 6: Aussparung
- 8: Linsensystem
- 11: erste Seite
- 12: zweite Seite
- B: Breite
- X: erste Richtung
- Y: zweite Richtung

## Patentansprüche

1. Leiterplatte (1) aufweisend:
a. eine erste Seite (11) und eine gegenüberliegende zweite Seite (12);
b. zumindest eine optische Faser (2) zum Weiterleiten eines optischen Signals (4), wobei die zumindest eine optische Faser (2) in der Leiterplatte (1) zwischen der ersten und zweiten Seite (11, 12) verläuft;
c. eine Aussparung (6) in der Leiterplatte (1), die sich von der ersten Seite (11) in Richtung zur zweiten Seite (12) zumindest bis zu der zumindest einen optischen Faser (2) erstreckt; und
d. ein Linsensystem (8), das in der Aussparung (6) angeordnet ist, so dass das optische Signal (4) zwischen der zumindest einen optischen Faser (2) und einem Strahlenverlauf parallel zur ersten Seite (11) außerhalb der Leiterplatte (1) geleitet werden kann, wobei
e. das Linsensystem (8) eine Doppellinse umfasst, und einteilig aus einem Kunststoff hergestellt ist.

2. Leiterplatte (1) nach Anspruch 1, bei dem das Linsensystem (8) auf den Einsatz von Spiegeln oder anderen optischen Bauteilen verzichtet.

3. Leiterplatte (1) nach Anspruch 1 oder 2, bei dem das optische Signal (4), dass aus einer beliebigen Richtung parallel zur ersten Seite (11) der Leiterplatte (1) eintrifft, vom Linsensystem (8) aufgenommen und an eine optische Faser (2) weitergeleitet wird.

4. Leiterplatte (1) nach einem der Ansprüche 1 - 3, bei dem die Aussparung (6) eine Bohrung umfasst.

5. Leiterplatte (1) nach einem der Ansprüche 1 - 4, bei dem das Linsensystem (8) formschlüssig in der Aussparung (6) angeordnet ist.
